# EUROPEAN PATENT SPECIFICATION

(11) **EP 3 287 197 B1**
(45) Date of publication and mention of the grant of the patent: **21.10.2020**
(21) Application number: 16783197.3
(22) Date of filing: 20.04.2016
(51) Int. Cl.: B03B 4/06, B07B 4/08, F23G 5/30, B01J 8/26, B01J 8/34, B01J 8/36, B01J 8/44

(54) **FLUIDIZED-BED CLASSIFICATION METHOD AND FLUIDIZED-BED CLASSIFICATION APPARATUS**
WIRBELSCHICHTKLASSIFIZIERUNGSVERFAHREN UND WIRBELSCHICHTKLASSIFIZIERUNGSVORRICHTUNG
PROCÉDÉ DE CLASSIFICATION ET DISPOSITIF DE CLASSIFICATION DE LIT FLUIDISÉ

(30) Priority: 21.04.2015 JP 2015087036
(43) Date of publication of application: 28.02.2018
(73) Proprietor: Ebara Environmental Plant Co., Ltd., Tokyo 144-0042 (JP)
(72) Inventor: MIYOSHI, Norihisa, Tokyo 144-0042 (JP); MATSUOKA, Kei, Tokyo 144-0042 (JP); IIDA, Yuichi, Tokyo 144-0042 (JP); ISHIKAWA, Eiji, Tokyo 144-0042 (JP); KAWAGISHI, Takayoshi, Tokyo 144-0042 (JP)
(74) Representative: Klang, Alexander H.
(86) International application number: PCT/JP2016/062519
(87) International publication number: WO 2016/171176

(56) References cited:
- GB-A- 1 081 739
- JP-A- H0 824 791
- JP-A- S5 479 871
- JP-A- 2001 193 912
- JP-A- 2003 294 216
- JP-A- 2007 319 739
- JP-A- 2016 000 379
- JP-U- S5 418 984
- US-A- 2 865 504
- US-A1- 2006 000 143

## Description

### Technical field

The present invention relates to a fluidized-bed classification method and a fluidized-bed classification apparatus for removing a foreign matter from a fluidized medium that forms a fluidized bed of a fluidized-bed solid fuel combustion furnace, such as a fluidized-bed combustion furnace, a fluidized-bed gasification furnace, and a circulating fluidized-bed boiler, and more particularly to a fluidized-bed classification method and a fluidized-bed classification apparatus applicable to a fluidized-bed furnace system which requires to draw out incombustibles, together with the fluidized medium, in a fluidized bed furnace for combusting wastes such as municipal wastes, refuse derived fuel (RDF), waste plastics, waste FRP, biomass waste, automotive waste and waste oil, or solid combustibles such as solid fuel containing incombustibles like coal.

### Background Art

Conventionally, in order to keep a grain size distribution of a fluidized medium in a fluidized bed furnace properly, a vibrating sieve has been used. However, the vibrating sieve may be clogged with a foreign matter, or may be worn by friction to have holes, or can cause a sympathetic vibration on a plant by its vibration. Thus, the vibrating sieve can be a cause of various problems.

In particular, if such clogging of the vibrating sieve is left untreated, the fluidized medium to be recovered is mixed with the foreign matter to be excluded and is then discharged together with the foreign matter to the outside of the system, thus not only hindering to maintain fluidization but also deteriorating environment around the vibrating sieve by dust if sieve mesh is frequently inspected and cleaned to prevent such clogging.

Attention is drawn to US 2 865 504 A, which relates to an apparatus for separating undesired components from a chamber receiving fluidized bed material, the chamber having a bottom including an air-permeable section inclined upwardly toward a sidewall of the chamber, an outlet adjacent a lower end of the inclined bottom section, vertical partition means within the chamber above its bottom and means for agitating the contents of the chamber extending along said inclined section and reciprocable lengthwise. Several of the chambers may be arranged adjacent each other to allow coarser and finer separation of components. Further, US 2006 000 143 A1 relates to a gasification furnace and a combustion furnace, which are integrated with each other to form a single fluidized-bed gasification and combustion furnace in which unburned char generated in the gasification furnace is combusted in the combustion furnace, and the thus generated heat of combustion is utilized as a heat source for gasification. The fluidized-bed gasification and combustion furnace comprises a gasification furnace and a combustion furnace which are divided by a first partition wall. In the gasification furnace, a revolving flow of the fluidized medium is formed by diffusion devices, provided on furnace bottoms, and an upward flow of the fluidized medium partly flows in the combustion furnace. The combustion furnace is divided by a main partition wall and in the main combustion chamber, a revolving flow of the fluidized medium is formed by diffusion devices provided on furnace bottoms, and an upward flow of the fluidized medium partly flows in the heat recovery chamber.

### Summary of Invention

### Technical Problem

In order to improve such situation, heretofore, a classification method using no sieve mesh has been devised. JP 62-39882 U and JP 2-548519 A disclose a fluidized bed classifier for classifying a mixture of coarse grain material and small grain material into the coarse grain material and the small grain material. However, it is apparent that because the fluidized bed classifier does not have a mechanism for discharging a foreign matter properly from the fluidized bed classifier, such fluidized bed classifier is not suitable for classifying the foreign matter and the fluidized medium in a system containing the foreign matter which is difficult to move horizontally in the fluidized bed.

Further, as disclosed in JP 4-472696 A, the present inventors have devised a technique for separating a bulky object from a fluidized medium by utilizing a fluidized bed, returning the fluidized medium together with a fluidizing air to a fluidized bed furnace, and discharging a mixture of a coarse grain medium and incombustibles from the fluidized bed furnace. However, in order to apply this technique to an existing facility, it is necessary to modify the existing facility on a large scale, and thus the applicable facilities are limited to newly constructed facilities.

Further, in the technique disclosed in JP 4-472696 A, because a fluidizing velocity Uo for fluidizing the fluidized medium in a fluidized-bed classification section is two times a minimum fluidizing velocity U_{mf} of the fluidized medium, the incombustibles having a relatively light weight and a large projected area, such as an aluminum pot lid, cannot be settled and removed easily, and thus such incombustibles are blown up onto the fluidized bed and possibly cause a blockage trouble or the like in the middle of the passage which allows the fluidized medium to return into the furnace.

JP 3-488917 A and JP 3-520343 A disclose a technique for settling and separating an object having a high specific gravity by fluidizing a fluidized medium in a fluidized-bed classification section at a fluidizing velocity Uo which is not more than three times the minimum fluidizing velocity U_{mf}, preferably not less than one time to less than two times the minimum fluidizing velocity U_{mf}. A means for discharging the foreign matter from the fluidized-bed classification section, disclosed in the above documents, is configured to discharge the foreign matter from an upper surface of a fluidized bed in the fluidized-bed classification section, and hence the fluidized medium, to be recovered, is discharged together with the foreign matter. Therefore, in order to avoid such discharge of the fluidized medium, a means for sieving the fluidized medium by using mesh is also disclosed. However, such means poses a dilemma that requires cleaning of the mesh.

JP 4-091082 A discloses a technique for supplying components for forming a solid-gas fluidized bed first, supplying an object to be classified subsequently, and further supplying components for forming the solid-gas fluidized bed further, thereby improving classification performance. However, such complicated operation is not suitable for an apparatus that requires continuous running.

Therefore, in the fluidized-bed furnace system, there has been a demand for a foreign matter classification method which can separate a foreign matter and impurities to be excluded from a fluidized medium and discharge the foreign matter and the impurities easily to the outside of the system without using a classification means comprising sieve mesh, can separate and remove large incombustibles having a relatively light weight such as an aluminum pot lid reliably, and can maintain a grain-size distribution of the fluidized medium properly. There is also a demand for a classification method which can be applied to a facility in which a vibrating sieve has been already installed.

The present invention has been made in view of the above circumstances. It is therefore an object of the present invention to provide a fluidized-bed classification method and a fluidized-bed classification apparatus which make full use of the characteristics of a fluidized bed.

### Solution to Problem

In accordance with the present invention, a fluidized-bed classification apparatus and method for removing a foreign matter by settling the foreign matter from a mixture of a fluidized medium as set forth in claims 1 and 4 are provided. Further embodiments are inter alia disclosed in the dependent claims. The fluidized-bed classification method inter alia comprise: feeding the mixture into a coarse classification section partitioned from a fine classification section by a partition wall; removing a foreign matter having a relatively large size and a foreign matter having a large specific gravity in the coarse classification section while supplying a fluidizing air into the coarse classification section; introducing the mixture, from which the foreign matters have been removed, into the fine classification section by mainly passing the mixture over the partition wall; and further removing a foreign matter in the fine classification section while supplying a fluidizing air into the fine classification section.

According to an aspect, a U_{mf} ratio in the coarse classification section may be kept at not less than 1 but less than 2.0, and a U_{mf} ratio in the fine classification section may be kept in a range of 1 to 1.5.

According to another aspect, the mixture to be fed into the coarse classification section comprises a mixture of a fluidized medium and incombustibles discharged from a fluidized-bed solid fuel combustion furnace, a fluidized-bed waste incinerator, or a fluidized-bed gasification furnace, and a harmonic mean diameter of the fluidized medium may be in a range of 0.2 mm to 0.8 mm.

The apparatus inter alia comprises: a coarse classification section configured to remove a foreign matter having a relatively large size and a foreign matter having a large specific gravity; a fine classification section configured to further remove a foreign matter from the mixture from which the foreign matters have been removed in the coarse classification section; a partition wall that partitions the coarse classification section and the fine classification section; a first fluidizing-air supply floorboard configured to supply a fluidizing air into the coarse classification section; and a second fluidizing-air supply floorboard configured to supply a fluidizing air into the fine classification section. The second fluidizing-air supply floorboard is inclined downward toward the coarse classification section, and an inclination angle of the second fluidizing-air supply floorboard is uniform or increases as a location on the second fluidizing-air supply floorboard comes closer to the coarse classification section. The first fluidizing-air supply floorboard further comprises a lower fluidizing-air supply floorboard and an upper fluidizing-air supply floorboard located higher than the lower fluidizing-air supply floorboard, and a discharge port is provided below the upper fluidizing-air supply floorboard, the discharge port being configured to discharge the foreign matters removed in the coarse classification section and the fine classification section.

According to an aspect, a U_{mf} ratio in the coarse classification section may kept at not less than 1 but less than 2.0, and a U_{mf} ratio in the fine classification section may be kept in a range of 1 to 1.5.

According to an aspect of the present invention, an average velocity of the fluidizing air in a vertical direction across a horizontal cross section of the fluidizing air supplied from the upper fluidizing-air supply floorboard may be set higher than an average velocity of the fluidizing air in the vertical direction across a horizontal cross section of the fluidizing air supplied from the lower fluidizing-air supply floorboard.

### Advantages of the Invention

According to the present invention, the foreign matter and the impurities to be excluded can be separated from the fluidized medium and discharged easily to the outside by the coarse classification section and the fine classification section partitioned by the partition wall. Specifically, the foreign mater having a relatively large size and the foreign matter having a large specific gravity can be separated and removed in the coarse classification section, and the foreign matter having a smaller size can be separated and removed in the fine classification section. Further, the fluidized-bed classification method and the fluidized-bed classification apparatus according to the present invention can be applied to the facility in which a vibrating sieve has been already installed.

### Brief Description of Drawings

FIG. 1 is a schematic view showing a fluidized-bed classification apparatus according to an embodiment of the present invention;
FIG. 2 is a schematic view showing a fluidized-bed classification apparatus according to another embodiment of the present invention; and
FIG. 3 is a schematic view showing a specific configuration for discharging an object to be excluded to the outside of a system.

### Description of Embodiments

A fluidized-bed classification method and a fluidized-bed classification apparatus according to embodiments of the present invention will be described below with reference to drawings.

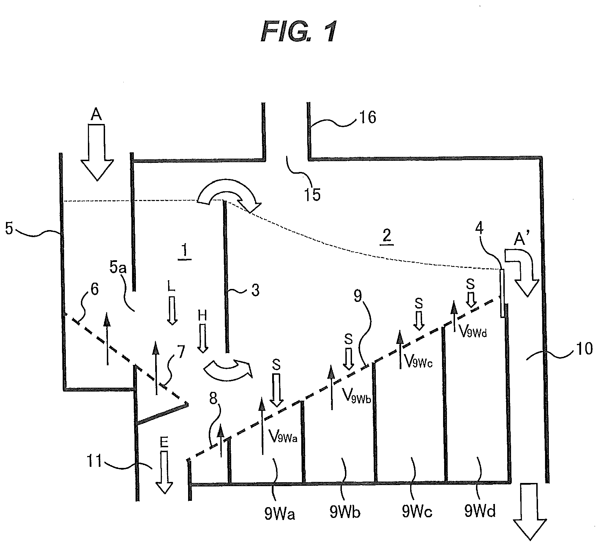

FIG. 1 is a schematic view showing a fluidized-bed classification apparatus according to an embodiment of the present invention. The fluidized-bed classification apparatus comprises a coarse classification section 1 and a fine classification section 2. A partition wall 3, extending vertically, is provided between the coarse classification section 1 and the fine classification section 2. The coarse classification section 1 and the fine classification section 2 are partitioned from each other by the partition wall 3. A feeding section 5 for feeding an object A, to be classified, into the fluidized-bed classification apparatus is provided next to the coarse classification section 1.

An object A to be classified comprises a mixture of a fluidized medium for forming a fluidized bed and a foreign matter incompetent to the formation of the fluidized bed. For example, the object A to be classified comprises a mixture of a fluidized medium and incombustibles discharged from a fluidized bed furnace such as a fluidized bed incinerator or a fluidized-bed gasification furnace. This fluidized medium has a harmonic mean diameter in the range of 0.2 mm to 0.8 mm, for example. The object A to be classified is delivered from the fluidized bed furnace (not shown) to the fluidized-bed classification apparatus, and is then fed through the feeding section 5 into the coarse classification section 1. Then, the foreign matter, such as a bulky object L or a heavy object H having a large specific gravity, is classified and removed in the coarse classification section 1.

In the embodiment shown in FIG. 1, the object A to be classified is fed through an opening 5a, formed in a side wall of the coarse classification section 1, to the coarse classification section 1. Alternatively, the object A to be classified may be fed directly to the coarse classification section 1 from the upper part of the coarse classification section 1. In the embodiment shown in FIG. 1, a fluidizing-air supply floorboard 6 is provided at a lower part of the feeding section 5. An amount of the object A to be fed into the fluidized-bed classification apparatus can be adjusted by adjusting an amount of fluidizing air supplied into the feeding section 5 from the fluidizing-air supply floorboard 6, and the object A, to be classified, is fed from a lower portion of the side wall of the coarse classification section 1. Therefore, the fluidized-bed classification apparatus has an advantage that the bulky object L and the heavy object H are settled and separated in a short settling distance.

The object A to be classified from which the bulky object L and the heavy object H have been removed overflows an upper end of the partition wall 3 and/or flows through an opening formed under the partition wall 3 into the fine classification section 2 adjacent to the coarse classification section 1. In the fine classification section 2, a foreign matter S is further settled and separated from the object A to be classified. The object A to be classified from which the foreign matter S has been removed in the fine classification section 2 becomes a classified object A' after classification, which overflows an end wall 4 of the fine classification section 2 and flows into an outlet 10. The outlet 10 is provided adjacent to the fine classification section 2 and extends in a vertical direction. The classified object A' is discharged through the outlet 10, and is then returned to the above-described fluidized bed furnace. The classified object A' after classification possibly contains a slight amount of foreign matter S and a slight amount of bulky object L, but these foreign matter S and bulky object L are returned to the fluidized bed furnace as they are.

The foreign matter S that has been settled and separated in the fine classification section 2 moves downward by its own weight toward the coarse classification section 1 on a fluidizing-air supply floorboard 9 constituting a bottom of the fine classification section 2. The foreign matter S, the bulky object L, the heavy object H (these objects L and H are those that have been settled and separated in the coarse classification section 1), and a small amount of the fluidized medium are collected to form an object E to be excluded to the outside of the system. The object E is then discharged to the outside of the system through a discharge port 11 which is provided at the lower part of the coarse classification section 1. The excluded object E contains a small amount of the fluidized medium which should not be excluded, but a problem does not arise as long as the amount of the fluidized medium excluded is not more than an allowable level. The important thing is that the amount of the bulky object L, the heavy object H, and the foreign matter S contained in the excluded object E is large enough to prevent them from being accumulated in the system.

In the coarse classification section 1, there are provided two different fluidizing-air supply floorboards (first fluidizing-air supply floorboards) 7, 8. The upper fluidizing-air supply floorboard 7 is disposed at a position higher than the lower fluidizing-air supply floorboard 8, and is located adjacent to the fluidizing-air supply floorboard 6 of the feeding section 5. The lower fluidizing-air supply floorboard 8 is located adjacent to the fluidizing-air supply floorboard (second fluidizing-air supply floorboard) 9 of the fine classification section 2. The discharge port 11 for discharging the object E to be excluded is disposed below the upper fluidizing-air supply floorboard 7. An average velocity of the fluidizing air in the vertical direction across a horizontal cross section of the fluidizing air, supplied from the upper fluidizing-air supply floorboard 7 into the coarse classification section 1, is kept higher than an average velocity of the fluidizing air in the vertical direction across a horizontal cross section of the fluidizing air supplied from the lower fluidizing-air supply floorboard 8 into the coarse classification section 1. Thus, an upward flow of the object A to be classified is produced above the upper fluidizing-air supply floorboard 7, while a downward flow of the object A to be classified is produced above the lower fluidizing-air supply floorboard 8. Therefore, even a light object, such as an aluminum foil, can be settled by the downward flow of the fluidized medium.

The upper fluidizing-air supply floorboard 7 is inclined downward toward the lower fluidizing-air supply floorboard 8, and the lower fluidizing-air supply floorboard 8 is inclined downward toward the discharge port 11 so as not to cause the bulky object L, the heavy object H and the foreign matter S to stay on the upper fluidizing-air supply floorboard 7 and the lower fluidizing-air supply floorboard 8, thereby allowing the bulky object L, the heavy object H and the foreign matter S to move smoothly toward the discharge port 11.

The fluidizing-air supply floorboard 9, constituting the bottom of the fine classification section 2, is inclined downward toward the lower fluidizing-air supply floorboard 8 of the coarse classification section 1. The lower end of the fluidizing-air supply floorboard 9 is located at the same height as, or slightly higher than the upper end of the lower fluidizing-air supply floorboard 8. Further, an inclination angle of the fluidizing-air supply floorboard 9 is equal to or smaller than an inclination angle of the lower fluidizing-air supply floorboard 8. This is for smoothly moving the foreign matter S, which has been settled and separated in the fine classification section 2, from the fluidizing-air supply floorboard 9 toward the lower fluidizing-air supply floorboard 8.

A plurality of wind boxes which are partitioned from each other are provided below the fluidizing-air supply floorboard 9 so that the flow velocity of the fluidizing air supplied from the fluidizing-air supply floorboard 9 can be changed in each location as necessary. In the embodiment shown in FIG. 1, four wind boxes 9Wa, 9Wb, 9Wc and 9Wd are provided. The fluidizing air is supplied from the wind boxes 9Wa, 9Wb, 9Wc and 9Wd through the fluidizing-air supply floorboard 9 at respective average velocities V_{9Wa}, V_{9Wb}, V_{9Wc} and V_{9Wd} in the vertical direction across the horizontal cross section of the fluidizing air. The average velocities V_{9Wa}, V_{9Wb}, V_{9Wc} and V_{9Wd} are adjusted so as to meet a condition of V_{9Wa}≧V_{9Wb}≧V_{9Wc}≧V_{9Wd} in principle. In other words, the average velocity decreases as the location comes closer to the downstream side or the outlet 10. This is for the purpose of suppressing the mixing of upper particles and lower particles caused by fluidization as the location comes closer to the downstream side. A U_{mf} ratio (= a fluidizing velocity / a minimum fluidizing velocity of the fluidized medium) in the coarse classification section 1 is kept at not less than 1 but less than 2.0. A U_{mf} ratio in the fine classification section 2 is kept in the range of 1 to 1.5.

The fluidizing air that has been supplied to the coarse classification section 1 and the fine classification section 2 flows into an opening 15 provided above the fine classification section 2, and is delivered to the fluidized bed furnace through an exhaust duct 16 coupled to the fluidized bed furnace. An upper part of a bed in the fine classification section 2 is kept at a pressure lower than the atmospheric pressure to prevent dust from being scattered around the classification apparatus from through-holes such as inspection openings.

The fluidizing-air supply floorboard 9 is inclined downward toward the coarse classification section 1, so that the settled and separated foreign matter S reaches the lower part of the coarse classification section 1 smoothly and merges with the bulky object L and the heavy object H that have been separated in the coarse classification section 1. The foreign matter S, the bulky object L, and the heavy object H are then discharged smoothly through the discharge port 11.

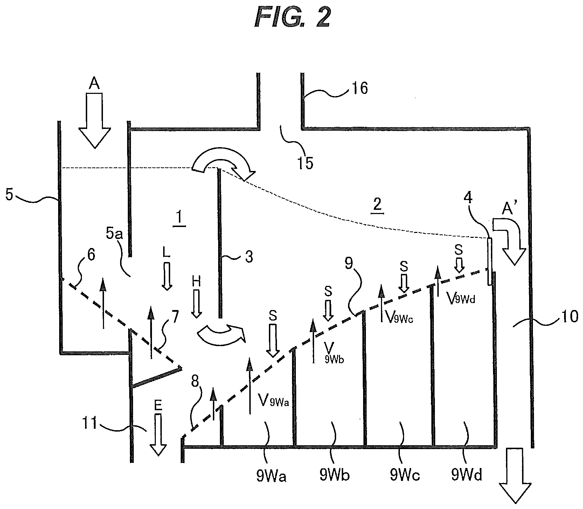

In the embodiment shown in FIG. 1, the fluidizing-air supply floorboard 9 is a flat plate having a single inclination angle. However, the inclination angle of the fluidizing-air supply floorboard 9 is not necessarily single and uniform. For example, in another embodiment, in order to facilitate movement of the foreign matter which has been settled onto the fluidizing-air supply floorboard 9, the inclination angle of the fluidizing-air supply floorboard 9 may increase as a location on the fluidizing-air supply floorboard 9 comes closer to the coarse classification section 1, as shown in FIG. 2. In such case also, the inclination angle of the lowest end portion of the fluidizing-air supply floorboard 9 should not be larger than the inclination angle of the lower fluidizing-air supply floorboard 8.

The inclination angles of the fluidizing-air supply floorboards 6, 7, 8 and 9 with respect to a horizontal plane should be at least 10° or more so that the settled foreign matter can move toward the discharge port 11 by its own weight, or may preferably be 20° or more so that the foreign matter can be excluded reliably. Preferable inclination angle is 25° or more, and more preferable inclination angle is 30° or more. Such inclination angles should properly be set according to the shape or the density of the bulky object L to be classified, and the size or the weight of the heavy object H to be classified.

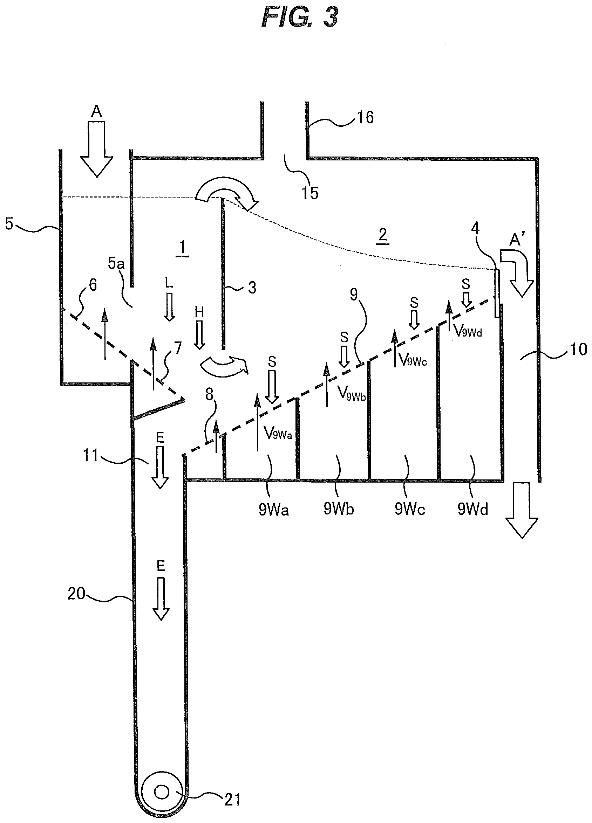

FIG. 3 shows a specific configuration for discharging the object E to be excluded to the outside of the system. A chute 20 extending in a vertical direction is connected to the lower part of the discharge port 11, and a mechanical discharging device 21 is provided at a lower end of the chute 20. When the chute 20 is filled with the object E to be excluded, the chute 20 can provide a function of material seal which prevents the fluidizing air, supplied from the fluidizing-air supply floorboard 8 and other sections, from leaking to the outside through the discharge port 11. If the mechanical discharging device 21 has a gas sealing function, it is not necessary to provide the chute 20.

The fluidized-bed classification apparatus according to the present invention can increase its processing capability easily by increasing a width of the apparatus (or inside depth of FIGS. 1, 2 and 3). The width of the fluidized-bed classification apparatus is at least about 0.3 m or more and about 3 m at a maximum, in view of the size of the bulky object to be treated. If the width of the fluidized-bed classification apparatus is narrow, the above mechanical discharging device 21 may comprise a double damper or a rotary valve. If the width of the fluidized-bed classification apparatus is large, a screw conveyor may be employed.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a fluidized-bed classification method and a fluidized-bed classification apparatus applicable to a fluidized-bed furnace system which requires to draw out incombustibles together with a fluidized medium in a fluidized furnace for combusting wastes, such as municipal wastes, refuse derived fuel (RDF), waste plastics, waste FRP, biomass waste, automotive waste and waste oil, or solid combustibles, such as solid fuel containing incombustibles like coal.

### Reference Signs List

1 coarse classification section
2 fine classification section
3 partition wall
4 end wall
5 feeding section
6 fluidizing-air supply floorboard of the feeding section
7 upper fluidizing-air supply floorboard of the coarse classification section
8 lower fluidizing-air supply floorboard of the coarse classification section
9 fluidizing-air supply floorboard of the fine classification section
9Wa, 9Wb, 9Wc, 9Wd wind box
10 outlet of the classified object after classification
11 discharge port of the object to be excluded
15 opening
16 exhaust duct
20 chute
21 mechanical discharging device
A object to be classified
A' classified object after classification
L bulky object (to be separated and removed from the object to be classified)
H heavy object (to be separated and removed from the object to be classified)
S foreign matter (to be separated and removed from the object to be classified)
E object to be excluded

## Claims

1. A fluidized-bed classification apparatus for removing a foreign matter by settling the foreign matter from a mixture of a fluidized medium for forming a fluidized bed and the foreign matter mixed with the fluidized medium, the foreign matter being incompetent to the formation of the fluidized bed, the apparatus comprising:
a coarse classification section (1) configured to remove a foreign matter having a relatively large size and a foreign matter having a large specific gravity;
a fine classification section (2) configured to further remove a foreign matter from the mixture from which the foreign matters have been removed in the coarse classification section (1);
a partition wall (3) that partitions the coarse classification section (1) and the fine classification section (2);
a first fluidizing-air supply floorboard (7, 8) configured to supply a fluidizing air into the coarse classification section (1); and
a second fluidizing-air supply floorboard (9) configured to supply a fluidizing air into the fine classification section (2);
wherein the second fluidizing-air supply floorboard (9) is inclined downward toward the coarse classification section (1), and an inclination angle of the second fluidizing-air supply floorboard (9) is uniform or increases as a location on the second fluidizing-air supply floorboard (9) comes closer to the coarse classification section (1),
wherein the first fluidizing-air supply floorboard (7,8) comprises a lower fluidizing-air supply floorboard (8) and an upper fluidizing-air supply floorboard (7) located higher than the lower fluidizing-air supply floorboard (8),
wherein a discharge port (11) is provided between the upper fluidizing-air supply floorboard (7) and the lower fluidizing-air supply floorboard (8), the discharge port (11) being configured to discharge the foreign matters removed in the coarse classification section (1) and the fine classification section (2), and
wherein the partition wall (3) is located right above a boundary between the lower fluidizing-air supply floorboard (8) and the second fluidizing-air supply floorboard (9).

2. The fluidized-bed classification apparatus according to claim 1, further comprising wind boxes (9Wa, 9Wb, 9Wc, 9Wd) which are partitioned from each other, the wind boxes (9Wa, 9Wb, 9Wc, 9Wd) being provided below the second fluidizing-air supply floorboard (9).

3. The fluidized-bed classification apparatus according to claim 2, wherein the partition wall (3) is located right above a lowest side of the wind boxes (9Wa, 9Wb, 9Wc, 9Wd).

4. A fluidized-bed classification method of removing a foreign matter by settling the foreign matter from a mixture of a fluidized medium for forming a fluidized bed and the foreign matter mixed with the fluidized medium, the foreign matter being incompetent to the formation of the fluidized bed, the method comprising:
feeding the mixture into a coarse classification section (1) partitioned from a fine classification section (2) by a partition wall (3);
removing foreign matters in the coarse classification section (1) while supplying a fluidizing air from an upper fluidizing-air supply floorboard (7) and a lower fluidizing-air supply floorboard (8) into the coarse classification section (1), thereby forming an upward flow of the fluidized medium above the upper fluidizing-air supply floorboard (7) and forming a downward flow of the fluidized medium above the lower fluidizing-air supply floorboard (8), the upper fluidizing-air supply floorboard (7) being located higher than the lower fluidizing-air supply floorboard (8);
introducing the mixture, from which the foreign matters have been removed, into the fine classification section (2) by mainly passing the mixture over the partition wall (3);
further removing a foreign matter in the fine classification section (2) while supplying a fluidizing air into the fine classification section (2); and
discharging the foreign matters through a discharge port (11) provided between the upper fluidizing-air supply floorboard (7) and the lower fluidizing-air supply floorboard (8).

5. The fluidized-bed classification method according to claim 4, wherein an average velocity of the fluidizing air in a vertical direction across a horizontal cross section of the fluidizing air supplied from the upper fluidizing-air supply floorboard (7) is higher than an average velocity of the fluidizing air in the vertical direction across a horizontal cross section of the fluidizing air supplied from the lower fluidizing-air supply floorboard (8).

6. The fluidized-bed classification method according to claim 4 or 5, wherein supplying the fluidizing air into the fine classification section (2) comprises supplying the fluidizing air from wind boxes at different velocities into the fine classification section (2) through a second fluidizing-air supply floorboard (9) provided adjacent to the lower fluidizing-air supply floorboard (8), average velocities of the fluidizing air from the wind boxes increasing in a direction toward the lower fluidizing-air supply floorboard (8).

## Patentansprüche

1. Wirbelbett-Unterteilungsvorrichtung zur Entfernung von Fremdstoffen durch Absetzen der Fremdstoffe aus einer Mischung eines fluidisierten Mediums zum Formen eines fluidisierten Bettes bzw. Wirbelbettes und der Fremdstoffe, die mit dem fluidisierten Medium gemischt sind, wobei die Fremdstoffe nicht das Wirbelbett bilden können, wobei die Vorrichtung Folgendes aufweist:
einen Grobunterteilungsabschnitt (1), der konfiguriert ist, um Fremdstoffe mit einer relativ großen Größe und Fremdstoffe mit einer großen Dichte zu entfernen;
einen Feinunterteilungsabschnitt (2), der konfiguriert ist, um weiter Fremdstoffe aus der Mischung zu entfernen, aus der die Fremdstoffe in dem Grobunterteilungsabschnitt (1) entfernt worden sind;
eine Unterteilungswand (3), welche den Grobunterteilungsabschnitt (1) und Feinunterteilungsabschnitt (2) trennt;
eine erste Fluidisierungsluftlieferbodenplatte (7, 8), die konfiguriert ist, um Fluidisierungsluft bzw. Wirbelluft in den Grobunterteilungsabschnitt (1) zu liefern; und
eine zweite Fluidisierungsluftlieferbodenplatte (9), die konfiguriert ist, um Fluidisierungsluft bzw. Wirbelluft in den Feinunterteilungsabschnitt (2) zu liefern;
wobei die zweite Fluidisierungsluftlieferbodenpatte (9) zu dem Grobunterteilungsabschnitt (1) hin nach unten geneigt ist, und wobei ein Neigungswinkel der zweiten Fluidisierungsluftlieferbodenpatte (9) gleichförmig ist oder zunimmt, wenn eine Stelle an der zweiten Fluidisierungsluftlieferbodenpatte (9) näher an den Grobunterteilungsabschnitt (1) kommt,
wobei die erste Fluidisierungsluftlieferbodenpatte (7, 8) eine untere Fluidisierungsluftlieferbodenpatte (8) und eine obere Fluidisierungsluftlieferbodenpatte (7) aufweist, die höher angeordnet ist als die untere Fluidisierungsluftlieferbodenpatte (8),
wobei ein Auslassanschluss (11) zwischen der oberen Fluidisierungsluftlieferbodenpatte (7) und der unteren Fluidisierungsluftlieferbodenpatte (8) vorgesehen ist, wobei der Auslassanschluss (11) so konfiguriert ist, dass er die Fremdstoffe, die in dem Grobunterteilungsabschnitt (1) und in dem Feinunterteilungsabschnitt (2) entfernt worden sind, wegführt und
wobei die Unterteilungswand (3) direkt über der Grenze zwischen der unteren Fluidisierungsluftlieferbodenpatte (8) und der zweiten Fluidisierungsluftlieferbodenpatte (9) angeordnet ist.

2. Wirbelbett-Unterteilungsvorrichtung nach Anspruch 1, die weiter Blaskästen (9Wa, 9Wb, 9Wc, 9Wd) aufweist, die voneinander abgeteilt sind, wobei die Blaskästen (9Wa, 9Wb, 9Wc, 9Wd) unter der zweiten Fluidisierungsluftlieferbodenpatte (9) vorgesehen sind.

3. Wirbelbett-Unterteilungsvorrichtung nach Anspruch 2, wobei die Unterteilungswand (3) direkt über der untersten Seite der Blaskästen (9Wa, 9Wb, 9Wc, 9Wd) angeordnet ist.

4. Wirbelbett-Unterteilungsverfahren zur Entfernung von Fremdstoffen durch Absetzen der Fremdstoffe aus einer Mischung eines fluidisierten Mediums bzw. Wirbelmediums zum Bilden eines Wirbelbettes und von Fremdstoffen, die mit dem fluidisierten Medium vermischt sind, wobei die Fremdstoffe nicht das Wirbelbett bilden können, wobei das Verfahren Folgendes aufweist:
Einspeisen der Mischung in einen Grobunterteilungsabschnitt (1), der von einem Feinunterteilungsabschnitt (2) durch eine Unterteilungswand (3) abgeteilt ist;
Entfernen von Fremdstoffen in dem Grobunterteilungsabschnitt (1) während Fluidisierungsluft bzw. Wirbelluft aus einer oberen Fluidisierungsluftlieferbodenpatte (7) und einer unteren Fluidisierungsluftlieferbodenpatte (8) in den Grobunterteilungsabschnitt (1) geliefert wird, wodurch ein aufwärts gerichteter Fluss des fluidisierten Mediums über der oberen Fluidisierungsluftlieferbodenpatte (7) gebildet wird, und wobei ein abwärts gerichteter Fluss des fluidisierten Mediums über der unteren Fluidisierungsluftlieferbodenpatte (8) gebildet wird, wobei die obere Fluidisierungsluftlieferbodenpatte (7) höher angeordnet ist als die untere Fluidisierungsluftlieferbodenpatte (8);
Einleiten der Mischung, aus der die Fremdstoffe entfernt worden sind, in den Feinunterteilungsabschnitt (2), indem die Mischung hauptsächlich über die Unterteilungswand (3) hinweg geleitet wird;
weiteres Enfernen von Fremdstoffen in dem Feinunterteilungsabschnitt (2), während Fluidisierungsluft bzw. Wirbelluft in den Feinunterteilungsabschnitt (2) geliefert wird; und
Auslassen der Fremdstoffe durch einen Auslassanschluss (11), der zwischen der oberen Fluidisierungsluftlieferbodenpatte (7) und der unteren Fluidisierungsluftlieferbodenpatte (8) vorgesehen ist.

5. Wirbelbett-Unterteilungsverfahren nach Anspruch 4, wobei eine durchschnittliche Geschwindigkeit der Fluidisierungsluft bzw. Wirbelluft in einer vertikalen Richtung über einen horizontalen Querschnitt der Fluidisierungsluft, die von der oberen Fluidisierungsluftlieferbodenpatte (7) geliefert wurde, höher ist als eine durchschnittliche Geschwindigkeit der Fluidisierungsluft in der vertikalen Richtung über einen horizontalen Querschnitt der Fluidisierungsluft, die von der unteren Fluidisierungsluftlieferbodenpatte (8) geliefert wurde.

6. Wirbelbett-Unterteilungsverfahren nach Anspruch 4 oder 5, wobei das Liefern der Fluidisierungsluft in den Feinunterteilungsabschnitt (2) aufweist, die Fluidisierungsluft aus Blaskästen mit unterschiedlichen Geschwindigkeiten in den Feinunterteilungsabschnitt (2) durch eine zweite Fluidisierungsluftlieferbodenplatte (9) zu liefern, die benachbart zu der unteren Fluidisierungsluftlieferbodenplatte (8) vorgesehen ist, wobei durchschnittliche Geschwindigkeiten der Fluidisierungsluft aus den Blaskästen in einer Richtung zu der unteren Fluidisierungsluftlieferbodenplatte (8) hin zunehmen.

## Revendications

1. Appareil de classification de lit fluidisé pour éliminer une matière étrangère en décantant la matière étrangère d'un mélange d'un milieu fluidisé pour former un lit fluidisé et de la matière étrangère mélangée avec le milieu fluidisé, la matière étrangère étant inapte à la formation du lit fluidisé, l'appareil comprenant :
une section de classification grossière (1) configurée pour éliminer une matière étrangère ayant une taille relativement grande et une matière étrangère ayant une gravité spécifique élevée ;
une section de classification fine (2) configurée pour éliminer davantage une matière étrangère du mélange dont les matières étrangères ont été retirées dans la section de classification grossière (1) ;
une cloison de séparation (3) qui divise la section de classification grossière (1) et la section de classification fine (2) ;
un premier panneau de plancher d'alimentation en air de fluidisation (7, 8) configuré pour fournir un air de fluidisation dans la section de classification grossière (1) ; et
un deuxième panneau de plancher d'alimentation en air de fluidisation (9) configuré pour fournir un air de fluidisation dans la section de classification fine (2) ;
dans lequel le deuxième panneau de plancher d'alimentation en air de fluidisation (9) est incliné vers le bas vers la section de classification grossière (1), et un angle d'inclinaison du deuxième panneau de plancher d'alimentation en air de fluidisation (9) est uniforme ou augmente en même temps qu'un emplacement sur le deuxième panneau de plancher d'alimentation en air de fluidisation (9) se rapproche de la section de classification grossière (1),
dans lequel le premier panneau de plancher d'alimentation en air de fluidisation (7, 8) comprend un panneau de plancher d'alimentation en air de fluidisation inférieur (8) et un panneau de plancher d'alimentation en air de fluidisation supérieur (7) situé plus haut que le panneau de plancher d'alimentation en air de fluidisation inférieur (8),
dans lequel un orifice de refoulement (11) est prévu entre le panneau de plancher d'alimentation en air de fluidisation supérieur (7) et le panneau de plancher d'alimentation en air de fluidisation inférieur (8), l'orifice de refoulement (11) étant configuré pour évacuer les matières étrangères éliminées dans la section de classification grossière (1) et dans la section de classification fine (2), et
dans lequel la cloison de séparation (3) est située juste au-dessus d'une limite entre le panneau de plancher d'alimentation en air de fluidisation inférieur (8) et le deuxième panneau de plancher d'alimentation en air de fluidisation (9).

2. Appareil de classification de lit fluidisé selon la revendication 1, comprenant en outre des boîtes à vent (9Wa, 9Wb, 9Wc, 9Wd) qui sont séparés les unes des autres, les boîtes à vent (9Wa, 9Wb, 9Wc, 9Wd) étant prévues sous le deuxième panneau de plancher d'alimentation en air de fluidisation (9).

3. Appareil de classification de lit fluidisé selon la revendication 2, dans lequel la cloison de séparation (3) est située juste au-dessus du plus bas côté des boîtes à vent (9Wa, 9Wb, 9Wc, 9Wd).

4. Procédé de classification de lit fluidisé d'élimination d'une matière étrangère en décantant la matière étrangère d'un mélange d'un milieu fluidisé pour former un lit fluidisé et la matière étrangère mélangée avec le milieu fluidisé, la matière étrangère étant inapte à la formation du lit fluidisé, le procédé comprenant les étapes suivantes :
la fourniture du mélange dans une section de classification grossière (1) séparée d'une section de classification fine (2) par une cloison de séparation (3) ;
l'élimination de matières étrangères dans la section de classification grossière (1) tout en fournissant un air de fluidisation à partir d'un panneau de plancher d'alimentation en air de fluidisation supérieur (7) et d'un panneau de plancher d'alimentation en air de fluidisation inférieur (8) dans la section de classification grossière (1), formant ainsi un flux vers le haut du milieu fluidisé au-dessus du panneau de plancher d'alimentation en air de fluidisation supérieur (7) et formant ainsi un flux vers le bas du milieu fluidisé au-dessus du panneau de plancher d'alimentation en air de fluidisation inférieur (8), le panneau de plancher d'alimentation en air de fluidisation supérieur (7) étant situé plus haut que le panneau de plancher d'alimentation en air de fluidisation inférieur (8) ;
l'introduction du mélange, dans lequel les matières étrangères ont été éliminées, dans la section de classification fine (2) en faisant passer principalement le mélange sur la cloison de séparation (3) ;
l'élimination supplémentaire d'une matière étrangère dans la section de classification fine (2) tout en fournissant un air de fluidisation dans la section de classification fine (2) ; et
le déchargement des matières étrangères par un orifice de refoulement (11) prévu entre le panneau de plancher d'alimentation en air de fluidisation supérieur (7) et le panneau de plancher d'alimentation en air de fluidisation inférieur (8).

5. Procédé de classification de lit fluidisé selon la revendication 4, dans lequel une vélocité moyenne de l'air de fluidisation dans une direction verticale à travers une section transversale horizontale de l'air de fluidisation fourni à partir du panneau de plancher d'alimentation en air de fluidisation supérieur (7) est supérieure à une vélocité moyenne de l'air de fluidisation dans la direction verticale à travers une section transversale horizontale de l'air de fluidisation fourni à partir du panneau de plancher d'alimentation en air de fluidisation inférieur (8).

6. Procédé de classification de lit fluidisé selon la revendication 4 ou 5, dans lequel la fourniture de l'air de fluidisation dans la section de classification fine (2) comprend la fourniture de l'air de fluidisation à partir de boîtes à vent à différentes vélocités dans la section de classification fine (2) à travers un deuxième panneau de plancher d'alimentation en air de fluidisation (9) prévu adjacent au panneau de plancher d'alimentation en air de fluidisation inférieur (8), des vélocités moyennes de l'air de fluidisation provenant des boîtes à vent augmentant dans une direction orientée vers le panneau de plancher d'alimentation en air de fluidisation inférieur (8).
